(19) Europäisches Patentamt / European Patent Office / Office européen des brevets

(11) **EP 2 750 969 B1**

(12) **FASCICULE DE BREVET EUROPEEN**

(45) Date de publication et mention
de la délivrance du brevet:
**11.10.2017 Bulletin 2017/41**

(21) Numéro de dépôt: **12762333.8**

(22) Date de dépôt: **13.08.2012**

(51) Int Cl.:
*B64C 27/14* (2006.01)       *B64D 35/08* (2006.01)
*H02K 16/00* (2006.01)       *B60K 6/383* (2007.10)
*B64D 27/24* (2006.01)

(86) Numéro de dépôt international:
**PCT/FR2012/051892**

(87) Numéro de publication internationale:
**WO 2013/030489 (07.03.2013 Gazette 2013/10)**

(54) **AÉRONEF ÉQUIPÉ D'UN GROUPE ÉLECTROMOTEUR DISTRIBUÉ À ROUES LIBRES**

LUFTFAHRZEUG MIT AUS MEHREREN ELEKTROMOTOREN MIT FREILAUF BESTEHENDEM ANTRIEB

AIRCRAFT COMPRISING A DISTRIBUTED ELECTRIC POWER UNIT WITH FREE WHEELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2011 FR 1157829**

(43) Date de publication de la demande:
**09.07.2014 Bulletin 2014/28**

(73) Titulaires:
• **Chantriaux, Eric**
**13100 Aix-en-Provence (FR)**
• **Chretien, Pascal**
**Oxley, QLD 4075 (AU)**

(72) Inventeurs:
• **Chantriaux, Eric**
**13100 Aix-en-Provence (FR)**
• **Chretien, Pascal**
**Oxley, QLD 4075 (AU)**

(74) Mandataire: **Roman, Alexis**
**Cabinet Roman**
**35 rue Paradis**
**B.P. 30064**
**13484 Marseille Cedex 20 (FR)**

(56) Documents cités:
EP-A1- 2 148 066          DE-A1-102008 014 404
DE-U1-202007 006 976     FR-A1- 2 957 207
JP-A- 2002 153 027        US-A1- 2010 253 168

**Description**

**Domaine technique de l'invention.**

L'invention a pour objet un aéronef à voilure tournante ou fixe équipé d'un groupe électromoteur distribué composé d'un empilement d'éléments électromoteurs produisant chacun une fraction de la puissance totale nécessaire pour la mise en rotation d'un arbre, chaque dit élément électromoteur intégrant une roue libre.

L'invention concerne le domaine technique des transmissions électromagnétiques de puissance appliquées aux aéronefs à voilures fixes (avions) ou tournantes (hélicoptères), pilotés ou non (par exemple : drones).

**État de la technique.**

Généralement, les systèmes de propulsion classiques pour aéronefs comportent : un moteur thermique ou turbomoteurs, ou turboréacteurs double flux, et un réducteur mécanique à base d'engrenages couplé à l'arbre du rotor. Les réducteurs à base d'engrenages sont actuellement utilisés :

- sur hélicoptères, pour transmettre le couple mécanique produit par le ou les moteurs ou turbomoteurs actionnant le ou les rotors (principaux et/ou arrière). On passe ainsi d'une vitesse de rotation élevée (typiquement 30.000 tours/min pour une turbine) à une faible vitesse sur l'arbre rotor (comprise entre 500 et 300 tours/minute pour les hélicoptères usuels).
- sur avions, les moteurs ou turbomoteurs entrainent des hélices (ou rotors).

Il est à noter que les boites de transmissions mécaniques montées sur les machines modernes sont supposées tenir 30 minutes de vol sans lubrification en cas de rupture du carter, à condition de voler à puissance réduite, ce qui implique dans le meilleur des cas l'annulation de la mission, et dans des cas malheureusement fréquents la perte de la machine et équipages suite à la désintégration prématurée en vol des ensembles mécaniques. Sur un terrain d'opérations la résilience aux impacts balistiques est fondamentale. En résumé, dans le cas où le réducteur mécanique est défectueux, l'aéronef et l'équipage peuvent être perdus. Les conséquences sont donc, en général, dramatiques.

On connait par le document brevet CA 2.230.270 (MARTEL) un arbre multi-motorisé permettant d'utiliser plusieurs moteurs sur un même aéronef. Chaque moteur est capable de produire la totalité de la puissance totale nécessaire à la propulsion de l'aéronef. Ce dispositif permet, en cas de panne d'un des moteurs, d'utiliser le moteur restant. Toutefois, l'arbre de sortie de chaque moteur est décalé de l'arbre de l'hélice, un système complexe de poulies et d'embrayages assurant le transfert d'énergie. Non seulement ce système de propulsion nécessite un encombrement relativement important puisque l'ensemble moteur est surdimensionné de part la redondance envisagée, mais il n'offre pas une sécurité optimale dans le cas où les poulies et les embrayages seraient défectueux.

Le document brevet KR 2004.0018612 (KOREA AEROSPACE) décrit un système de propulsion permettant d'améliorer la réactivité de l'appareil en détectant rapidement et précisément l'état dudit système avec un contrôleur de propulsion. Ce système comprend : un groupe générateur d'énergie ; une génératrice ; un ensemble de batteries ; deux moteurs électriques pilotés par un driver. Les moteurs électriques ne sont pas dans une architecture distribuée où chacun produit une fraction de la puissance totale nécessaire à la propulsion de l'avion, chacun desdits moteurs étant totalement indépendant. Ici encore, ce système de propulsion n'offre pas une sécurité optimale dans le cas où l'un des moteurs serait défectueux.

Le document brevet US 2009/0145998 (SALYER) décrit un système de propulsion hybride pour aéronefs et notamment pour hélicoptères. Ce système comprend : un groupe générateur d'énergie ; une génératrice ; un moteur électrique dont le rotor est coaxial au rotor principal de l'hélicoptère ; un ensemble de batteries pouvant servir seules à alimenter le moteur électrique. Dans le cas où le moteur électrique venait à être défectueux, la sécurité de l'aéronef ne serait plus convenablement assurée.

Le document brevet US 5.054.716 (WILSON) décrit un système de propulsion pour aéronefs de type « tiltrotor ». Un unique moteur est associé à chacun des rotors. Un mécanisme de transmission permet de connecter les rotors entre eux de sorte que si l'un des moteurs est défaillant, le moteur restant puisse transmettre l'énergie mécanique aux deux rotors. Toutefois, si le mécanisme de transmission venait à être défaillant, la sécurité de l'aéronef ne serait plus assurée.

Le document DE 10 2008 014404 (SWISS UAV GMBH) divulgue un aéronef sans pilote humain comportant une motorisation de conception hybride. Un moteur à combustion interne entraine un alternateur générant un courant électrique. Ce dernier alimente un moteur électrique assurant la motorisation primaire et/ou des batteries tampon. Le moteur électrique peut également être alimenté par le courant fourni par les batteries tampon. Un mécanisme de transmission composé d'un embrayage et d'une unité de renvoi d'angle à 90° est interposé entre l'arbre du moteur électrique et l'arbre de rotation du rotor. Si ce mécanisme de transmission venait à être défaillant, la sécurité de l'aéronef ne serait plus assurée.

Le document DE 20 2008 002249 U1 (DILL HANS DIETER) divulgue également un aéronef comportant une motorisation de conception hybride (moteur électrique et moteur à combustion interne). Un mécanisme de transmission composé de roues dentées est interposé entre l'arbre du moteur électrique et l'arbre de rotation du rotor. Si ce système de transmission venait à être défaillant, la sécurité de l'aéronef ne serait plus assurée.

Le document DE 20 2007 006 976 U1 divulgue un aéronef à voilure tournante comportant un rotor mis en rotation par un groupe électromoteur distribué en prise directe avec l'arbre de rotation. Face à cet état des choses, l'objectif principal de l'invention est d'augmenter la fiabilité de l'ensemble transmission, tout en diminuant de façon significative l'encombrement, la masse et les coûts d'entretien.

## Divulgation de l'invention.

La solution proposée par l'invention est un aéronef à voilures tournantes ou fixes comportant un ou plusieurs rotors et/ou une ou plusieurs hélices, le ou les rotors et/ou la ou les hélices étant mis en rotation à vitesse variable ou constante par au moins un arbre, ledit aéronef intégrant un groupe moteur configuré pour assurer la propulsion et/ou la sustentation dudit aéronef en mettant en rotation ledit arbre.

Cet aéronef est remarquable en ce que :

- le groupe moteur est un groupe électromoteur distribué composé de plusieurs éléments électromoteurs empilés, chaque élément étant adapté pour produire, sur l'arbre de rotation, une fraction de la puissance totale nécessaire à la propulsion et/ou à la sustentation dudit aéronef,
- le groupe électromoteur distribué est en prise directe avec l'arbre de rotation, aucun mécanisme de transmission de mouvement n'étant interposé entre ledit groupe et ledit arbre,
- chaque élément électromoteur est connecté directement à l'arbre de rotation et comporte au moins un stator fixe, au moins un rotor mobile et au moins une roue libre mécanique ou électromagnétique en prise directe avec ledit arbre de rotation, ledit rotor mobile coopérant avec ladite roue libre de manière à s'accoupler audit arbre de rotation en cas de fonctionnement normal de l'élément électromoteur et se désaccoupler dudit arbre en cas de panne dudit élément électromoteur,
- les axes de rotation des rotors mobiles, des roues libres et de l'arbre de rotation sont coaxiaux.

Etant donné que le groupe électromoteur distribué est en prise directe avec l'arbre de rotation, les mécanismes de transmission utilisés jusqu'à ce jour sont complètement éliminés, réduisant de fait l'encombrement par rapport aux groupes moteurs connus de l'art antérieur et augmentant considérablement la fiabilité de la chaine de transmission. En outre, l'architecture empilée des éléments électromoteurs associée à l'intégration judicieuse de roues libres à l'intérieur même desdits éléments permet, en cas d'avarie sur l'un desdits éléments, de continuer à transmettre en toute sécurité une puissance suffisante à l'arbre de rotation. Sur un terrain d'opérations la résilience aux impacts balistiques est fondamentale, et l'invention offre cette amélioration.

Dans le but de réduire d'avantage l'encombrement de chaque élément électromoteur, chaque roue libre se situe préférentiellement dans le même plan que le rotor mobile auquel elle est associée.

Les roues libres sont avantageusement réglées de manière à synchroniser angulairement l'ensemble des rotors mobiles des éléments électromoteurs lors de la mise en puissance du groupe électromoteur.

Les éléments électromoteurs sont préférentiellement séparés et isolés physiquement les uns des autres, chaque élément électromoteur étant inséré dans un caisson dédié.

Selon une autre caractéristique avantageuse de l'invention, l'empilement des éléments électromoteurs comporte un nombre de stators fixes différent ou égal au nombre de rotors mobiles.

Une unité de gestion électronique est avantageusement associée à un moyen pour contrôler en continu l'intégrité de chaque élément électromoteur. Et si un ou plusieurs éléments électromoteurs sont défectueux, l'unité de gestion électronique est préférentiellement configurée pour émettre une consigne permettant de :

- reconfigurer en temps réel l'ensemble des éléments électromoteurs en ajoutant, si nécessaire, un ou plusieurs éléments électromoteurs de réserve,
- ou reconfigurer en temps réel la puissance délivrée par chaque élément électromoteur valide de sorte que le groupe électromoteur distribué continu à transmettre une puissance suffisante à l'arbre de rotation.

De manière avantageuse, l'aéronef comporte :

- un groupe générateur d'énergie destiné à produire une énergie électrique, ledit groupe étant associé à un moyen pour distribuer ladite énergie,
- un moyen pour stocker l'énergie électrique produite par le groupe générateur,

- le groupe électromoteur distribué étant alimenté en énergie électrique à travers un contrôleur de puissance :

  ◦ par le moyen de stockage de l'énergie électrique,
  ◦ et/ou par le groupe générateur.

Le moyen de stockage de l'énergie électrique peut être avantageusement composé d'un ensemble de batteries et/ou de super-condensateurs.

Le groupe générateur d'énergie électrique est préférentiellement composé d'un générateur thermochimique ou d'un générateur thermoélectrique ou d'un générateur radio isotopique ou de piles à combustibles, ou d'un turbomoteur ou d'un moteur à combustion interne muni d'une génératrice interne linéaire ou rotative, ou actionnant une génératrice externe.

Une unité de gestion électronique est avantageusement configurée pour gérer le point de fonctionnement du groupe électromoteur distribué en fonction de la demande de puissance dudit aéronef.

L'aéronef peut comporter une unité de gestion électronique configurée pour gérer l'alimentation du groupe électromoteur distribué, ladite unité intégrant un programme comportant :

- des instructions pour alimenter le groupe électromoteur distribué uniquement par l'énergie électrique produite par le groupe générateur,
- des instructions pour alimenter le groupe électromoteur distribué uniquement par l'énergie électrique stockée dans le moyen de stockage,
- des instructions pour alimenter le groupe électromoteur distribué en combinant l'énergie électrique produite par le groupe générateur à l'énergie électrique stockée dans le moyen de stockage.

Selon encore une autre caractéristique avantageuse de l'invention, l'aéronef peut comporter :

- un moyen pour contrôler l'état de fonctionnement du groupe générateur,
- une unité de gestion électronique configurée pour gérer l'alimentation du groupe électromoteur distribué, ladite unité intégrant un programme comportant des instructions pour alimenter ledit groupe électromoteur uniquement par l'énergie électrique stockée dans le moyen de stockage, dans le cas où le groupe générateur est défaillant.

L'aéronef peut également comporter une unité de gestion électronique configurée pour gérer l'alimentation du groupe électromoteur distribuée, ladite unité intégrant un programme comportant des instructions pour alimenter ledit groupe électromoteur uniquement par l'énergie électrique stockée dans le moyen de stockage, et éventuellement des instructions pour simultanément arrêter le fonctionnement du groupe générateur. Ceci est particulièrement avantageux pour supprimer toute signature infrarouge de l'aéronef.

## Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :

- la figure 1 schématise l'agencement du dispositif de propulsion conforme à l'invention pour une propulsion distribuée sur un hélicoptère à rotors coaxiaux,
- la figure 2 schématise l'agencement de deux dispositifs de propulsion conformes à l'invention pour une propulsion distribuée sur le rotor principal et sur le rotor anti-couple d'un hélicoptère conventionnel,
- la figure 3 est une vue en coupe selon A-A montrant l'agencement du groupe électromoteur distribué au niveau du rotor anti-couple de l'hélicoptère de la figure 2,
- la figure 4 schématise l'agencement du dispositif de propulsion conforme à l'invention pour une propulsion distribuée sur un aéronef à voilure fixe,
- la figure 5 schématise la connexion du groupe électromoteur distribué conforme à l'invention sur le rotor principal d'un hélicoptère conventionnel,
- la figure 6 est une vue agrandie de la figure 5 détaillant une architecture d'un élément électromoteur conforme à l'invention,
- la figure 7 est une vue agrandie de la figure 5 détaillant une autre architecture d'un élément électromoteur conforme à l'invention.

Sur les figures, les doubles flèches représentent la puissance et les flèches simples, les données (data) échangées.

**Modes de réalisation de l'invention.**

Le dispositif de propulsion conforme à l'invention s'applique principalement à la propulsion électrique distribuée redondante, appliquée aux aéronefs à voilures tournantes (hélicoptères) ou fixes (avions), pilotés ou non (drones), comportant une ou plusieurs hélices et/ou un ou plusieurs rotors mis en rotation par au moins un arbre.

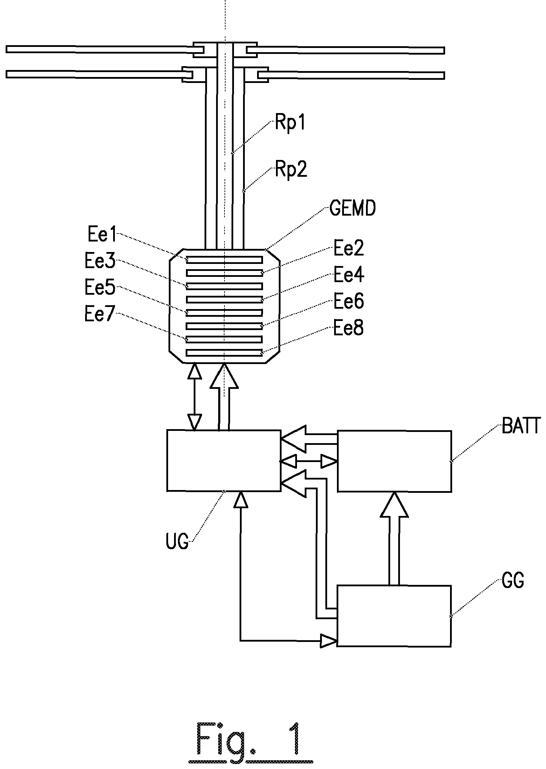

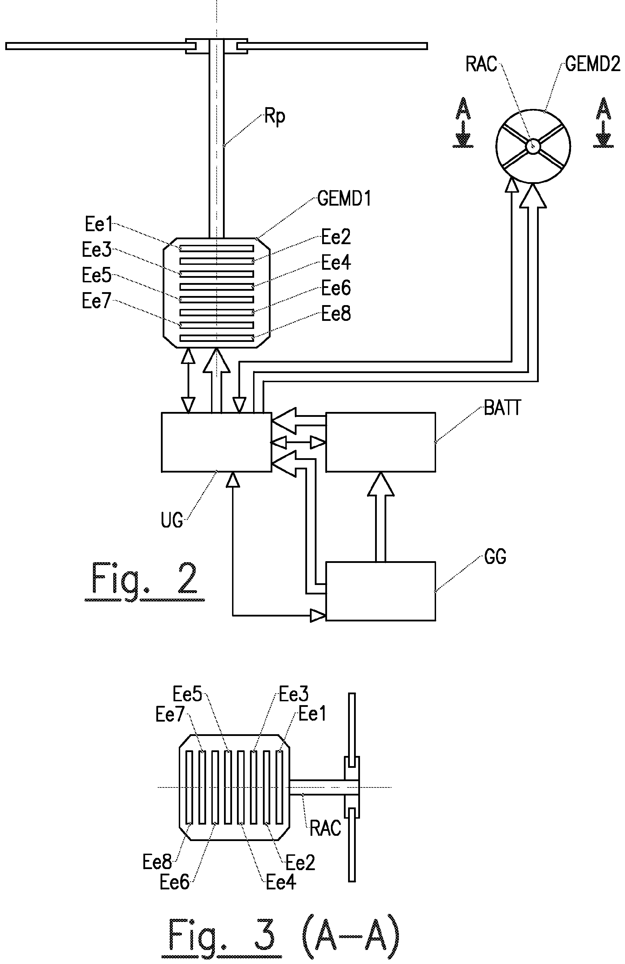

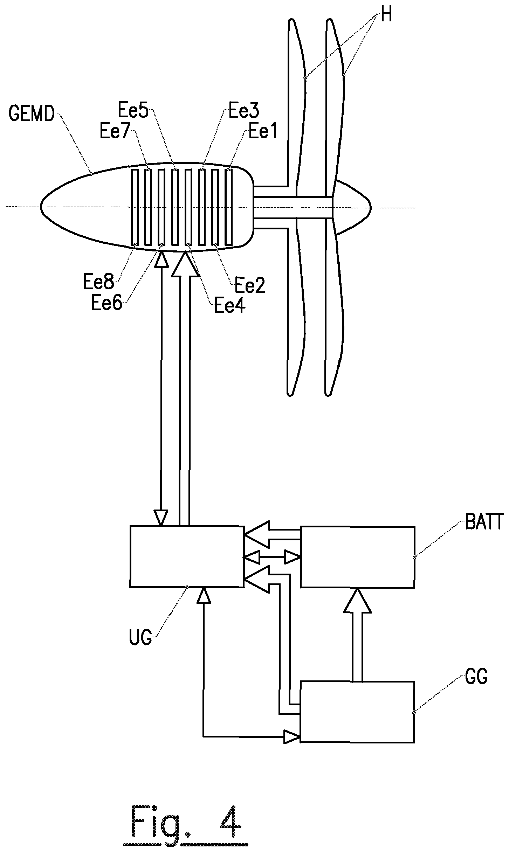

Selon l'invention, un groupe moteur GEMD met en rotation à vitesse variable ou constante au moins un arbre rotor. Dans l'exemple de la figure 1, le groupe moteur GEMD met en rotation deux rotors coaxiaux Rp1, Rp2 d'un hélicoptère. Dans l'exemple des figures 2 et 3, un groupe moteur GEMD1 met en rotation le rotor principal Rp d'un hélicoptère et un autre groupe moteur GEMD2 met en rotation le Rotor de queue Anti-Couple (RAC). Dans l'exemple de la figure 4, le groupe moteur GEMD met en rotation des arbres sur lesquels sont montées des hélices coaxiales H.

Conformément à l'invention, le groupe moteur GEMD est un groupe électromoteur distribué, c'est-à-dire comportant plusieurs éléments électromoteurs Ee1, Ee2, ..., Een unitaires, capables, chacun, de produire une fraction de la puissance totale nécessaire à la mise en rotation de l'arbre Rp1, Rp2, Rp, RAC, H. Par « élément électromoteur », on entend au sens de la présente invention, une entité capable de transformer une énergie électrique en une énergie mécanique. Il s'agit par exemple de moteur électrique intégrant dans sa structure une partie fixe (stator) et une partie mobile (rotor+roue libre). En pratique, les stators comprennent des bobinages et les rotors plusieurs pôles magnétiques. Pour optimiser l'encombrement et la masse du groupe électromoteur distribué GEMD, le nombre de parties fixes (stator) peut être différent ou égal au nombre de parties mobiles (rotor+roue libre). Le groupe électromoteur distribué GEMD pour rotors ou hélices coaxiales tels que montré sur les figures 1 et 4, peut par exemple être constitué d'éléments électromoteurs partageant chacun des stators communs et deux rotors avec sorties sur arbres coaxiaux.

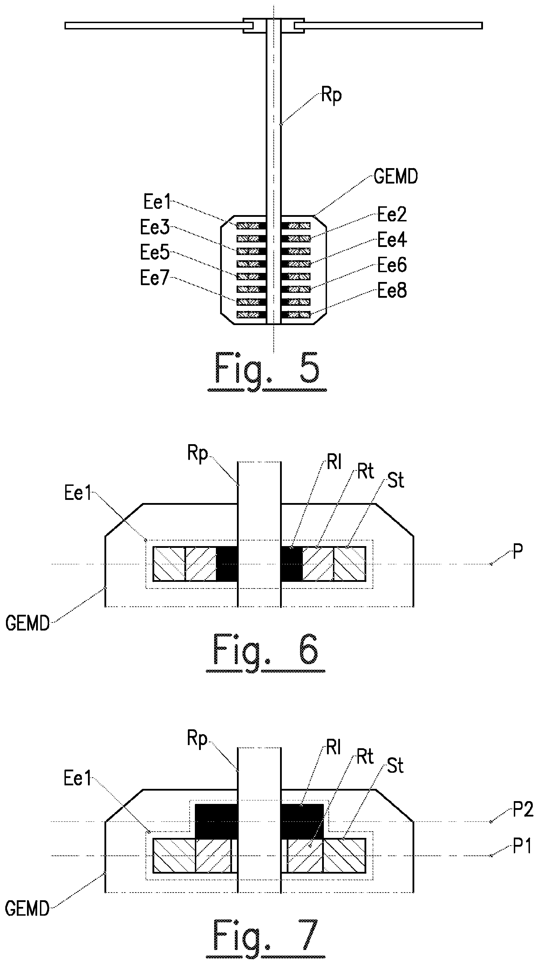

Les éléments électromoteurs Ee1, Ee2, ..., Een sont empilés en parallèles les uns au-dessus des autres (figures 1 et 2) ou les uns à côtés des autres (figures 3 et 4) de manière à obtenir un ensemble multi-étages. En se rapportant plus particulièrement à la figure 5, ces éléments électromoteurs Ee1, Ee2, ..., Een sont directement intégrés dans la structure du groupe électromoteur GEMD. Ce dernier est en prise directe avec l'arbre de rotation Rp1, Rp2, Rp, RAC, H, aucun mécanisme de transmission de mouvement, et notamment toute forme de renvoi d'angle ou d'engrenage, n'étant interposé entre ledit groupe et ledit arbre.

En se rapportant aux figures 5 à 7, chaque élément électromoteur Ee1, Ee2, ..., Een est connecté directement à l'arbre de rotation Rp1, Rp2, Rp, RAC, H et comporte au moins un stator fixe St et au moins un rotor mobile Rt apte à s'accoupler audit arbre de rotation pour lui transmettre une puissance mécanique. Chaque élément électromoteur Ee1, Ee2, ..., Een intègre préférentiellement au moins une roue libre Rl mécanique ou électromagnétique. Cette dernière est avantageusement directement intégrée dans la structure des éléments électromoteurs Ee1, Ee2, ..., Een. Les roues libres Rl ne sont donc pas disposées en dehors du groupe électromoteur distribué GEMD mais directement intégrées dans ce dernier, réduisant de fait son encombrement.

Chaque roue libre Rl comporte une partie en prise directe avec le rotor mobile Rt et une partie en prise directe avec l'arbre de rotation Rp1, Rp2, Rp, RAC, H. Dans le cas de roue libre mécanique, des cliquets, des éléments roulants ou des cames permettent d'interrompre momentanément l'entraînement en rotation de l'arbre de rotation Rp1, Rp2, Rp, RAC, H qui peut néanmoins continuer de tourner librement. Une roue libre électromagnétique consiste en un moteur à induction qui, en l'absence d'excitation électrique, permet d'interrompre l'entraînement en rotation de l'arbre de rotation Rp1, Rp2, Rp, RAC, H tout en lui laissant une possibilité de tourner librement.

En fonctionnement normal, chaque rotor mobile Rt est ainsi susceptible de coopérer avec une roue libre Rl de manière à s'accoupler à l'arbre de rotation Rp1, Rp2, Rp, RAC, H pour lui transmettre la puissance mécanique. Par contre, en cas de panne d'un élément électromoteur Ee1, Ee2, ..., Een, la roue libre Rl désaccouple le rotor Rt de l'arbre de rotation Rp1, Rp2, Rp, RAC, H. Cela est particulièrement avantageux dans le cas d'un court circuit dans un bobinage du stator Rt susceptible de provoquer un très violent freinage inductif du rotor.

Les roues libres Rl peuvent être situées dans le même plan P que le rotor mobile Rt auquel elles sont associées (figure 6) ou situées dans un autre plan P1, parallèle au plan P2 dudit rotor (figure 7). Dans le premier cas, l'encombrement longitudinal du groupe électromoteur GEMD est réduit. Dans le second cas, c'est l'encombrement radial du groupe électromoteur GEMD qui est diminué.

Dans les figures annexées, le groupe électromoteur distribué GEMD est composé de huit éléments électromoteurs (n=8), mais un nombre supérieur ou inférieur peut être prévu en fonction de la puissance totale qui doit être développée et/ou en fonction de la puissance unitaire de chaque élément. La puissance totale générée peut varier de quelque Kilos Watt (par exemple pour la mise en rotation d'un rotor de queue) à plusieurs milliers de Kilos Watt (par exemple pour la mise en rotation du système de propulsion à hélices et/ou rotors coaxiaux d'un avion).

Pour éviter tout surdimensionnement du groupe électromoteur GEMD qui augmenterait de manière nuisible la masse embarquée dans l'aéronef, les éléments électromoteurs ne peuvent en aucun cas fournir seuls la puissance nécessaire à la propulsion et/ou à la sustentation dudit aéronef. Au contraire, chaque élément électromoteur Ee1, Ee2,

..., Een, produit, sur l'arbre de rotation Rp1, Rp2, Rp, RAC, H, une puissance mécanique, de sorte que :

$$Pr = \sum_{i=1}^{n} Ki.Pim$$

où :

- Pr représente la puissance mécanique nominale nécessaire à la propulsion et/ou à la sustentation dudit aéronef,
- Pim représente la puissance mécanique maximale délivrable par l'élément électromoteur de rang i, sur l'arbre de rotation Rp1, Rp2, Rp, RAC, H, telle que Pim<Pr,
- Ki représente le détarage de puissance de l'élément électromoteur de rang i, telle que $0 \leq ki \leq 1$, Ki étant une variable ajustable en fonction du nombre d'éléments électromoteurs valide et/ou en fonction de la puissance mécanique nominale Pr nécessaire à la propulsion et/ou à la sustentation dudit aéronef à un instant t,
- n représente le nombre d'éléments électromoteurs valides composant le groupe électromoteur GEMD, tel que $n \geq 2$, et préférentiellement tel n=5, les vibrations étant fortement limitées dans le groupe électromoteur pour ce nombre d'élément électromoteur.

Plus particulièrement, les éléments électromoteurs Ee1, Ee2, ..., Een, sont dimensionnés de sorte que le nombre minimal « Nmin » desdits éléments pouvant délivrer ensembles la puissance mécanique nominale Pr nécessaire à la propulsion et/ou à la sustentation dudit aéronef est telle que $Nmin \geq 2$. Un élément électromoteur seul est donc incapable de fournir la puissance mécanique nominale Pr, de manière à respecter les contraintes de masse et de puissances exigées par un aéronef.

Tout ou partie des éléments électromoteurs Ee1, Ee2, ..., Een, peuvent être dimensionnés pour délivrer chacun une puissance mécanique maximale Pim différente sur l'arbre de rotation Rp1, Rp2, Rp, RAC, H. Il est par exemple possible d'agencer à une extrémité du groupe électromoteur GEMD, les éléments électromoteurs capables de délivrer les puissances mécaniques les plus élevées, et d'agencer à l'autre extrémité, les éléments électromoteurs délivrant les puissances mécaniques les plus basses. Cette configuration « conique » assure un meilleur refroidissement des éléments électromoteurs Ee1, Ee2, ..., Een. Dans ce cas, les facteurs de détarage Ki sont différents pour chacun des éléments électromoteurs Ee1, Ee2, ..., Een.

Tous les éléments électromoteurs peuvent toutefois être dimensionnés pour délivrer chacun une puissance mécanique maximale Pim identique sur l'arbre de rotation Rp1, Rp2, Rp, RAC, H. On obtient alors une configuration « cylindrique » dans laquelle la répartition des puissances mécaniques est homogène sur l'axe de rotation Rp1, Rp2, Rp, RAC, H. Dans ce cas, les facteurs de détarage Ki sont identiques pour chacun desdits éléments électromoteurs.

La puissance maximale PM pouvant être développée sur l'arbre de rotation Rp1, Rp2, Rp, RAC, H est:

$$PM = \sum_{i=1}^{n} Pim$$

La marge de puissance $P_f(>1)$ s'exprime de la forme :

$$P_f = \frac{P_{1m} + P_{2m} + P_{3m} + P_{4m} + \cdots + P_{nm}}{k_1.P_{1m} + k_2.P_{2m} + k_3.P_{3m} + k_4.P_{4m} + \cdots + k_n.P_{nm}}$$

Pour le cas particulier où tous les éléments électromoteurs Ee1, Ee2, ..., Een sont identiques, étant donné que K1=K2=....=Kn=K

Il vient :

$$P_f = \frac{1}{k}$$

Le nombre maximum « Nm » d'éléments électromoteurs Ee1, Ee2, ..., Een pouvant tomber en panne sans diminution de la puissance nominale Pr sur l'arbre de rotation Rp1, Rp2, Rp, RAC, H est :

$$N_m = \frac{(P_{1m} + P_{2m} + P_{3m} + P_{4m} + \cdots + P_{nm}) - k.(P_{1m} + P_{2m} + P_{3m} + P_{4m} + \cdots + P_{nm})}{P_{nm}}$$

$$= \frac{P_r.(P_f - 1)}{P_{nm}}$$

Où Nm est un entier naturel non nul.

Les éléments électromoteurs Ee1, Ee2, ..., Een, peuvent être séparés et isolés physiquement (ségrégations mécaniques) et/ou séparés et isolés électriquement (ségrégation électrique) les uns des autres. Pour une ségrégation mécanique, chaque élément électromoteur peut par exemple être inséré dans un caisson dédié (ou boîte ou « casing » en anglais). Pour une ségrégation électrique, on peut par exemple prévoir un ou plusieurs bobinages distincts sur le même noyau ferromagnétique. Ce type de ségrégation offre par exemple au groupe électromoteur distribué GEMD une résilience certaine aux effets des dommages subséquents des feux pouvant affecter un élément électromoteur.

Le groupe électromoteur distribué GEMD est géré par une unité de gestion électronique UG. Cette dernière consiste en une électronique plus ou moins complexe, typiquement équipée d'un ou plusieurs processeurs digitaux ou analogiques configurés pour exécuter un ou plusieurs programmes, sous-programmes, microprogrammes ou tous autres types de software équivalents, afin de gérer le fonctionnement du groupe électromoteur distribué GEMD, et de manière plus générale celui du dispositif objet de l'invention. En particulier, l'unité de gestion UG permet de synchroniser entre eux les éléments électromoteurs Ee1, Ee2, ..., Een.

L'unité de gestion UG est préférentiellement associée à un moyen pour contrôler en continu l'intégrité de chaque élément électromoteur Ee1, Ee2, ..., Een. Le moyen de contrôle peut par exemple consister en un ensemble de capteurs intégrés de manière intrinsèque dans chaque élément électromoteur et par exemple configurés pour détecter la rotation et l'angle du rotor, l'alimentation électrique du stator, le couple et/ou la puissance générée, etc. Si un ou plusieurs éléments électromoteurs Ee1, Ee2, ..., Een initialement actifs venaient à être défectueux, l'unité de gestion UG est alors configurée pour émettre une consigne permettant de reconfigurer en temps réel la puissance fournie par l'ensemble desdits éléments. Par exemple, en fonctionnement normal, une partie seulement des éléments électromoteurs (par ex : Ee1 à Ee6) peut suffire à transmettre la puissance nécessaire à l'arbre de rotation Rp1, Rp2, Rp, RAC, H. En cas de défection d'éléments électromoteurs (par ex : Ee5 et Ee6), l'unité de gestion UG met instantanément en service d'autres éléments électromoteurs de réserves (par ex : Ee7 et Ee8) pour que le groupe électromoteur distribué GEMD puisse continuer à transmettre une puissance suffisante à l'arbre de rotation Rp1, Rp2, Rp, RAC, H.

D'une manière préférée, si un ou plusieurs éléments électromoteurs Ee1, Ee2, ..., Een initialement actifs venaient à être défectueux, l'unité de gestion UG est configurée pour émettre, à destination des autres éléments électromoteurs valides, une consigne permettant de reconfigurer linéairement, en temps réel, la puissance délivrée par chacun desdits éléments électromoteurs valides, en modifiant la variable « Ki », de sorte que le groupe électromoteur distribué GEMD continue à transmettre une puissance suffisante à l'arbre de rotation Rp1, Rp2, Rp, RAC, H. Par exemple, en fonctionnement normal, l'ensemble des éléments électromoteurs (par ex : Ee1 à Ee8) fournissent chacun une fraction de leur puissance maximale de façon à ce que le groupe électromoteur distribué transmette une puissance nominale à l'arbre de rotation Rp1, Rp2, Rp, RAC, H. En cas de défection d'éléments électromoteurs (par ex : Ee5 et Ee6), l'unité de gestion UG reconfigure la puissance délivrée par chaque élément électromoteur encore valide (par ex : Ee1, Ee2, Ee3, Ee4, Ee7 et Ee8) en augmentant la valeur de détarage Ki, pour que le groupe électromoteur distribué GEMD puisse continuer à transmettre une puissance suffisante à l'arbre de rotation Rp1, Rp2, Rp, RAC, H. Dans le cas où huit éléments électromoteurs sont initialement mis en services et que deux éléments électromoteurs deviennent défectueux, les six éléments électromoteurs encore valides délivreront 1.33 fois la puissance qu'ils fournissaient avant la panne.

Il est par ailleurs possible de moduler la distribution de la puissance sur chaque élément électromoteur Ee1, Ee2, ..., Een afin d'optimiser les rendements et dissipations thermiques. Les éléments électromoteurs Ee1, Ee2, ..., Een, ne sont pas forcément tous de même taille et ne fournissent pas nécessairement la même puissance.

Le groupe électromoteur GEMD a donc une structure distribuée, redondante, auto réparable et, dans le cas d'aéronefs, configurable en vol, procurant ainsi une haute résilience aux pannes multiples et aux effets des dommages subséquents d'impacts balistiques multiples, ou des feux.

L'unité de gestion UG gère le point de fonctionnement du groupe électromoteur distribué GEMD en fonction de la demande de puissance de l'aéronef. En particulier, l'unité de gestion UG peut faire varier le couple ou le régime de rotation de chaque élément électromoteur Ee1, Ee2, ..., Een en fonction de la demande de puissance de l'aéronef. Par exemple, en cas de défection d'éléments électromoteurs, et si aucun autre élément électromoteur de réserves n'est disponible, l'unité de gestion UG peut émettre une consigne afin d'augmenter le couple ou le régime de rotation des éléments électromoteurs encore en service, pour que le groupe électromoteur distribué GEMD puisse continuer à transmettre une puissance suffisante à l'arbre de rotation Rp1, Rp2, Rp, RAC, H.

En se rapportant aux figures annexées, l'aéronef intègre un groupe générateur d'énergie GG utilisé pour produire une énergie électrique. Ce groupe générateur GG peut être composé d'un générateur thermochimique, thermoélectrique (Peltier ou autre), radio isotopique (nucléaire), de pile à combustibles, d'un turbomoteur ou d'un moteur à combustion interne muni d'un générateur électrique interne ou actionnant un générateur externe. Typiquement, ce groupe générateur d'énergie GG est associé à un moyen pour distribuer l'énergie électrique produite. Ce moyen peut consister en une électronique plus ou moins complexe éventuellement gérée par l'unité de gestion UG.

L'énergie électrique produite par le groupe générateur GG peut être temporairement stockée dans un moyen de stockage BATT. En pratique, ce dernier peut consister en un ensemble de batteries et/ou de super-condensateurs et/ou tout autre moyen similaire (volants d'inertie sur paliers magnétiques par exemple) ayant leur propre système de gestion et de régulation électronique. Les super-condensateurs sont des condensateurs ayant des capacités exceptionnellement élevées, typiquement au-dessus de la centaine voire des milliers de Farads. Ces composants doivent leur existence aux récentes découvertes de matériaux à hautes constantes diélectriques. Contrairement à une batterie, un super-condensateur peut fournir des intensités très élevées dans des temps courts. Dans le cas d'un hélicoptère, pendant la phase d'autorotation, le groupe électromoteur distribué GEMD peut fonctionner en générateur, permettant ainsi de recharger les batteries et/ou super-condensateurs tout en régulant la vitesse de rotation du ou des rotors principaux Rp1, Rp2, Rp.

Un contrôleur de puissance, intégré ou piloté par l'unité de gestion UG, permet de contrôler l'alimentation en énergie électrique du groupe électromoteur distribué GEMD. Cette énergie électrique peut provenir du moyen de stockage BATT et/ou du groupe générateur GG. L'unité de gestion UG est alors configurée pour gérer, via le contrôleur de puissance, l'alimentation du groupe électromoteur distribué GEMD. En pratique, l'unité de gestion UG intègre un programme comportant des instructions pour alimenter le groupe électromoteur distribué GEMD:

- soit uniquement par l'énergie électrique produite par le groupe générateur GG (une partie de cette énergie électrique pouvant ou non être simultanément dirigée vers le moyen de stockage BATT) ;
- soit uniquement par l'énergie électrique stockée dans le moyen de stockage BATT ;
- soit en combinant l'énergie électrique produite par le groupe générateur GG à l'énergie électrique stockée dans le moyen de stockage BATT (pour répondre aux demandes de puissance transitoires élevées, comme en phase de décollage par exemple). Cette combinaison conduit à une diminution significative de la masse du système de propulsion par rapport à un aéronef classique.

Le groupe générateur GG est préférentiellement associé à un moyen permettant de contrôler son état de fonctionnement. Il s'agit en pratique d'un ou plusieurs capteurs intégrés au dit groupe et permettant de contrôler en continu différents paramètres de fonctionnement. Si le groupe générateur GG est défaillant ou défectueux suite à des dommages mécaniques, incendiaires et/ou balistiques, l'unité de gestion GG émet instantanément des instructions pour alimenter le groupe électromoteur distribué GEMD par l'énergie électrique stockée dans le moyen de stockage BATT. Dans le cas d'un hélicoptère, en cas de panne du groupe générateur GG, l'énergie stockée dans le moyen de stockage BATT peut ainsi permettre un atterrissage propulsé et la possibilité de vol stationnaire, contrairement aux hélicoptères équipés de systèmes de propulsion conventionnels. La panne moteur et l'autorotation qui en découle n'est plus une urgence.

Le groupe générateur GG est dans certains cas susceptible de dégager une certaine quantité de chaleur (notamment dans le cas où il comporte un moteur à combustion interne) provoquant de fait une signature infrarouge de l'aéronef ou de l'engin, détectables par des méthodes d'analyse spectrale standard. Pour passer en mode furtif (sans signature infrarouge, élément de furtivité indispensable sur un terrain d'opérations) l'unité de gestion UG est apte à émettre des instructions pour alimenter le groupe électromoteur distribué GEMD uniquement par l'énergie électrique stockée dans le moyen de stockage BATT, et des instructions pour simultanément arrêter le fonctionnement du groupe générateur GG.

## Revendications

1. Aéronef à voilures tournantes ou fixes comportant un ou plusieurs rotors et/ou une ou plusieurs hélices, le ou les rotors et/ou la ou les hélices étant mis en rotation à vitesse variable ou constante par au moins un arbre (Rp1, Rp2, Rp, RAC, H), ledit aéronef intégrant un groupe moteur (GEMD) configuré pour assurer la propulsion et/ou la sustentation dudit aéronef en mettant en rotation ledit arbre,
**se caractérisant par le fait que :**

- le groupe moteur (GEMD) est un groupe électromoteur distribué composé de plusieurs éléments électromoteurs (Ee1, Ee2, ..., Een) empilés, chaque élément étant adapté pour produire, sur l'arbre de rotation (Rp1, Rp2, Rp, RAC, H), une fraction de la puissance totale nécessaire à la propulsion et/ou à la sustentation dudit aéronef,

- le groupe électromoteur distribué (GEMD) est en prise directe avec l'arbre de rotation (Rp1, Rp2, Rp, RAC, H), aucun mécanisme de transmission de mouvement n'étant interposé entre ledit groupe et ledit arbre,
- chaque élément électromoteur (Ee1, Ee2, ..., Een) est connecté directement à l'arbre de rotation (Rp1, Rp2, Rp, RAC, H) et comporte au moins un stator fixe (St), au moins un rotor mobile (Rt) et au moins une roue libre (Rl) mécanique ou électromagnétique en prise directe avec ledit arbre de rotation, ledit rotor mobile (Rt) coopérant avec ladite roue libre (Rl) de manière à s'accoupler audit arbre de rotation en cas de fonctionnement normal de l'élément électromoteur (Ee1, Ee2, ..., Een) et se désaccoupler dudit arbre en cas de panne dudit élément électromoteur,
- les axes de rotation des rotors mobiles (Rt), des roues libres (Rl) et de l'arbre de rotation (Rp1, Rp2, Rp, RAC, H) sont coaxiaux.

2. Aéronef selon la revendication 1, dans lequel chaque roue libre (Rl) se situe dans le même plan (P) que le rotor mobile (Rt) auquel elle est associée.

3. Aéronef l'une des revendications précédentes, dans lequel les éléments électromoteurs (Ee1, Ee2, ..., Een) sont séparés et isolés physiquement les uns des autres, chaque dit élément électromoteur étant inséré dans un caisson dédié.

4. Aéronef selon l'une des revendications précédentes, dans lequel l'empilement des éléments électromoteurs (Ee1, Ee2, ..., Een) comporte un nombre de stators fixes (St) différent ou égal au nombre de rotors mobiles (Rt).

5. Aéronef selon l'une des revendications précédentes, dans lequel une unité de gestion électronique (UG) est associée à un moyen pour contrôler en continu l'intégrité de chaque élément électromoteur (Ee1, Ee2, ..., Een).

6. Aéronef selon la revendication 5, dans lequel si un ou plusieurs éléments électromoteurs (Ee1, Ee2, ... Een) sont défectueux, l'unité de gestion électronique (UG) est configurée pour émettre une consigne permettant de :

- reconfigurer en temps réel l'ensemble des éléments électromoteurs en ajoutant, si nécessaire, un ou plusieurs éléments électromoteurs de réserve,
- ou reconfigurer en temps réel la puissance délivrée par chaque élément électromoteur valide de sorte que le groupe électromoteur distribué (GEMD) continue à transmettre une puissance suffisante à l'arbre de rotation (Rp1, Rp2, Rp, RAC, H).

7. Aéronef selon l'une des revendications précédentes, comportant:

- un groupe générateur d'énergie (GG) destiné à produire une énergie électrique, ledit groupe étant associé à un moyen pour distribuer ladite énergie,
- un moyen (BATT) pour stocker l'énergie électrique produite par le groupe générateur (GG),
- le groupe électromoteur distribué (GEMD) étant alimenté en énergie électrique à travers un contrôleur de puissance :

  ∘ par le moyen de stockage (BATT) de l'énergie électrique,
  ∘ et/ou par le groupe générateur (GG).

8. Aéronef selon la revendication 7 dans lequel le moyen de stockage (BATT) de l'énergie électrique est composé d'un ensemble de batteries et/ou de super-condensateurs.

9. Aéronef selon l'une des revendications 7 ou 8, dans lequel le groupe générateur d'énergie électrique (GG) est composé d'un générateur thermochimique ou d'un générateur thermoélectrique ou d'un générateur radio isotopique ou de piles à combustibles, ou d'un turbomoteur ou d'un moteur à combustion interne muni d'une génératrice interne ou actionnant une génératrice externe.

10. Aéronef selon l'une des revendications 7 à 9, dans lequel une unité de gestion électronique (UG) est configurée pour gérer le point de fonctionnement du groupe électromoteur distribué (GEMD) en fonction de la demande de puissance dudit aéronef.

11. Aéronef selon l'une des revendications 7 à 9, comportant une unité de gestion électronique (UG) configurée pour gérer l'alimentation du groupe électromoteur distribué (GEMD), ladite unité intégrant un programme comportant :

- des instructions pour alimenter le groupe électromoteur distribué (GEMD) uniquement par l'énergie électrique produite par le groupe générateur (GG),
- des instructions pour alimenter le groupe électromoteur distribué (GEMD) uniquement par l'énergie électrique stockée dans le moyen de stockage (BATT),
- des instructions pour alimenter le groupe électromoteur distribué (GEMD) en combinant l'énergie électrique produite par le groupe générateur (GG) à l'énergie électrique stockée dans le moyen de stockage (BATT).

**12.** Aéronef selon l'une des revendications 7 à 11, comportant :

- un moyen pour contrôler l'état de fonctionnement du groupe générateur (GG),
- une unité de gestion électronique (UG) configurée pour gérer l'alimentation du groupe électromoteur distribué (GEMD), ladite unité intégrant un programme comportant des instructions pour alimenter ledit groupe électromoteur uniquement par l'énergie électrique stockée dans le moyen de stockage (BATT), dans le cas où le groupe générateur (GG) est défaillant.

**13.** Aéronef selon l'une des revendications 7 à 12, comportant une unité de gestion électronique (UG) configurée pour gérer l'alimentation du groupe électromoteur distribuée (GEMD), ladite unité intégrant un programme comportant des instructions pour alimenter ledit groupe électromoteur uniquement par l'énergie électrique stockée dans le moyen de stockage (BATT), et des instructions pour simultanément arrêter le fonctionnement du groupe générateur (GG).

**Patentansprüche**

**1.** Luftfahrzeug mit drehbaren oder festen Flügeln mit einem oder mehreren Rotoren und/oder einem oder mehreren Propellern, wobei der oder die Rotoren und/oder der oder die Propeller mit variabler oder konstanter Drehzahl durch mindestens eine Welle (Rp1, Rp2, Rp, RAC, H) in Drehung versetzt werden, wobei in das Luftfahrzeug eine Motorgruppe (GEMD) integriert ist, die zum Sicherstellen des Antriebs und/oder Auftriebs des Luftfahrzeugs konfiguriert ist, indem die Welle in Drehung versetzt wird,
**dadurch gekennzeichnet, dass**:

- die Motorgruppe (GEMD) eine verteilte Elektromotorgruppe ist, die aus mehreren gestapelten Elektromotorelementen (Ee1, Ee2, ..., Een) besteht, wobei jedes Element dazu ausgelegt ist, an der Drehwelle (Rp1, Rp2, Rp, RAC, H) einen Bruchteil der Gesamtleistung zu erzeugen, die für den Antrieb und/oder den Auftrieb des Luftfahrzeugs erforderlich ist,
- die verteilte Elektromotorgruppe (GEMD) direkt mit der Drehwelle (Rp1, Rp2, Rp, RAC, H) in Eingriff steht, wobei kein Bewegungsübertragungsmechanismus zwischen die Gruppe und die Welle eingefügt ist,
- jedes Elektromotorelement (Ee1, Ee2, ..., Een) direkt mit der Drehwelle (Rp1, Rp2, Rp, RAC, H) verbunden ist und mindestens einen festen Stator (St), mindestens einen beweglichen Rotor (Rt) und mindestens eine mechanische oder elektromagnetische Freilaufkupplung (Rl) umfasst, die direkt mit der Drehwelle in Eingriff steht, wobei der bewegliche Rotor (Rt) mit der Freilaufkupplung (Rl) zusammenwirkt, um sich im Fall eines normalen Betriebs des Elektromotorelements (Ee1, Ee2, ..., Een) mit der Drehwelle zu koppeln und sich im Fall einer Störung des Elektromotorelements von der Welle abzukoppeln,
- wobei die Drehachsen der beweglichen Rotoren (Rt), der Freilaufkupplungen (Rl) und der Drehwelle (Rp1, Rp2, Rp, RAC, H) koaxial sind.

**2.** Luftfahrzeug nach Anspruch 1, bei dem jede Freilaufkupplung (Rl) in derselben Ebene (P) wie der bewegliche Rotor (Rt) liegt, mit dem sie verbunden ist.

**3.** Luftfahrzeug einem der vorhergehenden Ansprüche, bei dem die Elektromotorelemente (Ee1, Ee2, ..., Een) physikalisch voneinander getrennt und isoliert sind, wobei jedes Elektromotorelement in einen zweckgebundenen Kasten eingesetzt ist.

**4.** Luftfahrzeug nach einem der vorhergehenden Ansprüche, bei dem der Stapel der Elektromotorelemente (Ee1, Ee2, ..., Een) eine Anzahl von festen Statoren (St) umfasst, die von der Anzahl von beweglichen Rotoren (Rt) verschieden oder gleich dieser ist.

**5.** Luftfahrzeug nach einem der vorhergehenden Ansprüche, bei dem eine elektronische Steuereinheit (UG) einem Mittel zum kontinuierlichen Kontrollieren der Integrität jedes Elektromotorelements (Ee1, Ee2, ..., Een) zugeordnet ist.

6. Luftfahrzeug nach Anspruch 5, bei dem, wenn ein oder mehrere Elektromotorelemente (Ee1, Ee2, ..., Een) defekt sind, die elektronische Steuereinheit (UG) zum Aussenden einer Anweisung konfiguriert ist, die es ermöglicht:

   - in Echtzeit die Gesamtheit der Elektromotorelemente durch Hinzufügen, falls erforderlich, von einem oder mehreren Reserveelektromotorelementen umzukonfigurieren,
   - oder in Echtzeit die von jedem brauchbaren Elektromotorelement gelieferte Leistung umzukonfigurieren, so dass die verteilte Elektromotorgruppe (GEMD) weiterhin eine ausreichende Leistung auf die Drehwelle (Rp1, Rp2, Rp, RAC, H) überträgt.

7. Luftfahrzeug nach einem der vorhergehenden Ansprüche, das umfasst:

   - eine Energiegeneratorgruppe (GG), die dazu bestimmt ist, elektrische Energie zu erzeugen, wobei die Gruppe mit einem Mittel zum Verteilen der Energie verbunden ist,
   - ein Mittel (BATT) zum Speichern der durch die Generatorgruppe (GG) erzeugten elektrischen Energie,
   - wobei die verteilte Elektromotorgruppe (GEMD) mit elektrischer Energie über einen Leistungscontroller versorgt wird:

     ∘ durch das Mittel (BATT) zum Speichern der elektrischen Energie,
     ∘ und/oder durch die Generatorgruppe (GG).

8. Luftfahrzeug nach Anspruch 7, bei dem das Mittel (BATT) zum Speichern der elektrischen Energie aus einer Einheit von Batterien und/oder Superkondensatoren besteht.

9. Luftfahrzeug nach einem der Ansprüche 7 oder 8, bei dem die Generatorgruppe für elektrische Energie (GG) aus einem thermochemischen Generator oder einem thermoelektrischen Generator oder einem Radionuklidgenerator oder Brennstoffzellen oder einer Gasturbine oder einer Brennkraftmaschine, die mit einer internen Stromerzeugungsmaschine ausgestattet ist oder eine externe Stromerzeugungsmaschine betätigt, besteht.

10. Luftfahrzeug nach einem der Ansprüche 7 bis 9, bei dem eine elektronische Steuereinheit (UG) dazu konfiguriert ist, den Betriebspunkt der verteilten Elektromotorgruppe (GEMD) in Abhängigkeit vom Leistungsbedarf des Luftfahrzeugs zu steuern.

11. Luftfahrzeug nach einem der Ansprüche 7 bis 9 mit einer elektronischen Steuereinheit (UG), die dazu konfiguriert ist, die Versorgung der verteilten Elektromotorgruppe (GEMD) zu steuern, wobei die Einheit ein Programm integriert, das Folgendes umfasst:

    - Befehle zum Versorgen der verteilten Elektromotorgruppe (GEMD) nur mit der elektrischen Energie, die durch die Generatorgruppe (GG) erzeugt wird,
    - Befehle zum Versorgen der verteilten Elektromotorgruppe (GEMD) nur mit der elektrischen Energie, die im Speichermittel (BATT) gespeichert ist,
    - Befehle zum Versorgen der verteilten Elektromotorgruppe (GEMD) durch Kombinieren der durch die Generatorgruppe (GG) erzeugten elektrischen Energie mit der im Speichermittel (BATT) gespeicherten elektrischen Energie.

12. Luftfahrzeug nach einem der Ansprüche 7 bis 11, das Folgendes umfasst:

    - ein Mittel zum Kontrollieren des Betriebszustandes der Generatorgruppe (GG),
    - eine elektronische Steuereinheit (UG), die dazu konfiguriert ist, die Versorgung der verteilten Elektromotorgruppe (GEMD) zu steuern, wobei die Einheit ein Programm mit Befehlen zum Versorgen der Elektromotorgruppe nur mit der im Speichermittel (BATT) gespeicherten elektrischen Energie in dem Fall, in dem die Generatorgruppe (GG) funktionsunfähig ist, integriert.

13. Luftfahrzeug nach einem der Ansprüche 7 bis 12 mit einer elektronischen Steuereinheit (UG), die dazu konfiguriert ist, die Versorgung der verteilten Elektromotorgruppe (GEMD) zu steuern, wobei die Einheit ein Programm mit Befehlen zum Versorgen der Elektromotorgruppe nur mit der im Speichermittel (BATT) gespeicherten elektrischen Energie und Befehlen zum gleichzeitigen Anhalten des Betriebs der Generatorgruppe (GG) integriert.

**Claims**

1. Rotary or fixed wing aircraft comprising one or more rotors and/or one or more propellers, the rotor or rotors and/or the propeller or propellers being rotated at variable or constant speed by at least one shaft (Rp1, Rp2, Rp, RAC, H), said aircraft incorporating a power unit (GEMD) configured to ensure the propulsion and/or the lift of said aircraft by rotating said shaft,
   **characterized in that:**

   - the power unit (GEMD) is a distributed electric power unit made up of several stacked electric power elements (Ee1, Ee2, ..., Een), each element being adapted to produce, on the rotation shaft (Rp1, Rp2, Rp, RAC, H), a fraction of the total power needed to propel and/or lift said aircraft,
   - the distributed electric power unit (GEMD) is directly engaged with the rotation shaft (Rp1, Rp2, Rp, RAC, H), no movement transmission mechanism being inserted between said unit and said shaft,
   - each electric power element (Ee1, Ee2, ..., Een) is directly connected to the rotation shaft (Rp1, Rp2, Rp, RAC, H) and comprises at least one fixed stator (St), at least one mobile rotor (Rt) and at least one mechanical or electromagnetic free wheel (Rl) directly engaged with said rotation shaft, said mobile rotor (Rt) cooperating with said free wheel (Rl) so as to be coupled to said rotation shaft in case of normal operation of the electric power element (Ee1, Ee2, ..., Een) and to be uncoupled from said shaft in case of failure of said electric power element,
   - the rotation axes of the mobile rotors (Rt), of the free wheels (Rl) and of the rotation shaft (Rp1, Rp2, Rp, RAC, H), are coaxial.

2. Aircraft according to Claim 1, in which each free wheel (Rl) is situated in the same plane (P) as the mobile rotor (Rt) with which it is associated.

3. Aircraft one of the preceding claims, in which the electric power elements (Ee1, Ee2, ..., Een) are separated and isolated physically from one another, each said electric power element being inserted into a dedicated caisson.

4. Aircraft according to one of the preceding claims, in which the stacking of the electric power elements (Ee1, Ee2, ..., Een) comprises a number of fixed stators (St) different from or equal to the number of mobile rotors (Rt).

5. Aircraft according to one of the preceding claims, in which an electronic management unit (UG) is associated with a means for continuously monitoring the integrity of each electric power element (Ee1, Ee2, ..., Een).

6. Aircraft according to Claim 5, in which, if one or more electric power elements (Ee1, Ee2, ..., Een) is/are defective, the electronic management unit (UG) is configured to issue a setpoint making it possible to:

   - reconfigure in real time all of the electric power elements by adding, if necessary, one or more standby electric power elements,
   - or reconfigure in real time the power delivered by each valid electric power element such that the distributed electric power unit (GEMD) continues to transmit sufficient power to the rotation shaft (Rp1, Rp2, Rp, RAC, H).

7. Aircraft according to one of the preceding claims, comprising:

   - an energy generator set (GG) intended to produce electrical energy, said set being associated with a means for distributing said energy,
   - a means (BATT) for storing the electrical energy produced by the generator set (GG),
   - the distributed electric power unit (GEMD) being supplied with electrical energy through a power controller:

     o by the electrical energy storage means (BATT),
     o and/or by the generator set (GG).

8. Aircraft according to Claim 7, in which the electrical energy storage means (BATT) is made up of a set of batteries and/or of supercapacitors.

**9.** Aircraft according to one of Claims 7 or 8, in which the electrical energy generator set (GG) is made up of a thermochemical generator or of a thermoelectric generator or of a radio-isotopic generator or fuel cells, or of a jet engine or of an internal combustion engine provided with internal generator or actuating an external generator.

**10.** Aircraft according to one of Claims 7 to 9, in which an electronic management unit (UG) is configured to manage the operating point of the distributed electric power unit (GEMD) as a function of the power demand of said aircraft.

**11.** Aircraft according to one of Claims 7 to 9, comprising an electronic management unit (UG) configured to manage the supply of power to the distributed electric power unit (GEMD), said electronic management unit incorporating a programme comprising:

- instructions for powering the distributed electric power unit (GEMD) only by the electrical energy produced by the generator set (GG),
- instructions for powering the distributed electric power unit (GEMD) only by the electrical energy stored in the storage means (BATT),
- instructions for powering the distributed electric power unit (GEMD) by combining the electrical energy produced by the generator set (GG) with the electrical energy stored in the storage means (BATT).

**12.** Aircraft according to one of Claims 7 to 11, comprising:

- a means for monitoring the state of operation of the generator set (GG),
- an electronic management unit (UG) configured to manage the supply of power to the distributed electric power unit (GEMD), said electronic management unit incorporating a programme comprising instructions for powering said electric power unit only by the electrical energy stored in the storage means (BATT), in the case where the generator set (GG) is down.

**13.** Aircraft according to one of Claims 7 to 12, comprising an electronic management unit (UG) configured to manage the supply of power to the distributed electric power unit (GEMD), said electronic management unit incorporating a programme comprising instructions for powering said electric power unit only by the electrical energy stored in the storage means (BATT), and instructions for simultaneously stopping the operation of the generator set (GG).

Rp1

Rp2

GEMD

Ee1
Ee3
Ee5
Ee7

Ee2
Ee4
Ee6
Ee8

BATT

UG

GG

Fig. 1

**Fig. 2**

**Fig. 3 (A-A)**

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2230270
- KR 20040018612
- US 20090145998 A
- US 5054716 A
- DE 102008014404
- DE 202008002249 U1
- DE 202007006976 U1